# EUROPÄISCHE PATENTANMELDUNG

(11) **EP 0 653 164 A1**
(43) Veröffentlichungstag der Anmeldung: **17.05.1995**
(21) Anmeldenummer: 94116316.4
(22) Anmeldetag: 15.10.1994
(51) Int. Cl.: A22C 25/18, B26D 7/32

(54) **Vorrichtung zum Vereinzeln von quaderförmigen Stäbchen aus tiefgefrorenem Lebensmittel**

(30) Priorität: 13.11.1993 DE 4338839
(71) Anmelder: HEINZ NIENSTEDT MASCHINENFABRIK GMBH, D-45721 Haltern (DE)
(72) Erfinder: Kehrel, Siegfried, D-45721 Haltern (DE)
(74) Vertreter: Cohausz & Florack

(57) **Zusammenfassung**

Um die aus einer Schneidvorrichtung (3) für quer zugeführte, flachliegende Platten (5) aus tiefgefrorenem Lebensmittel in Reihe kommenden Stäbchen (8.1-8.n) zu vereinzeln, ist vorgesehen, daß die mittleren Reihen der Stäbchen (8.2-8.n-1) in Führungskanäle (10.1-10.n) geschoben werden, die spreizend auseinanderlaufen, während die Stäbchen (8.1,8.n) der beiden äußeren Reihen auf Einzelförderbänder (11,12) gegeben werden, die in einem tieferen Niveau als die Führungskanäle (10.1-10.n) angeordnet sind. An die Führungskanäle (10.1-10.n) und an die Enden der Einzelförderbänder (11,12) schließt sich ein mit höherer Fördergeschwindigkeit umlaufendes Förderband (15) an, das mindestens von dem unteren Niveau der Einzelförderbänder (11,12) auf das höhere Niveau der Führungsskanäle (10.1-10.n) ansteigt.

## Beschreibung

Die Erfindung bezieht sich auf eine Vorrichtung zum Vereinzeln von quaderförmigen Stäbchen, die von einer vorgeordneten, mehrere nebeneinander angeordnete rotierende Messerscheiben aufweisenden Schneidvorrichtung aus in Querlage zugeführten, quaderförmigen Platten aus tiefgefrorenem Lebensmittel hergestellt und lückenlos vorgeschoben werden.

Die Lebensmittelindustrie stellt dem Verbraucher tiefgefrorenes Lebensmittel, insbesondere Fisch, in Portionen, insbesondere Fischstäbchen, die allseits paniert sind, zur Verfügung. Diese Stäbchen werden durch mehrfaches Teilen eines tiefgefrorenen Blockes hergestellt. In der letzten Teilungsstufe werden quaderförmige Platten in Querlage flachliegend einer Schneidvorrichtung zugeführt, die aus mehreren rotierenden, nebeneinander angeordneten Messerscheiben, insbesondere mit Diamantsplittern belegten Messerscheiben besteht, die von unten oder oben die Platten in gleich große Stäbchen teilen (DE 35 12 488 C2). Um solche Stäbchen allseits mit einer Panade zu versehen, ist es erforderlich, solche eng nebeneinander und in dichter Folge aus der Schneidvorrichtung kommende Stäbchen zu vereinzeln.

Der Erfindung liegt die Aufgabe zugrunde, eine Vorrichtung zu schaffen, die die aus einer Schneidvorrichtung in lückenloser Reihe und praktisch ohne seitlichen Abstand kommenden Stäbchen vereinzelt.

Diese Aufgabe wird bei einer Vorrichtung der eingangs genannten Art dadurch gelöst, daß für jede der mittleren Reihen der lückenlos hintereinanderliegenden Stäbchen ein Führungskanal von der Schneidvorrichtung ausgeht, wobei die Gesamtheit der Führungskanäle spreizend auseinanderläuft, daß für jede der beiden äußeren Reihen der Stäbchen ein unterhalb des Niveaus der Führungskanäle angeordnetes Einzelförderband von der Schneidvorrichtung ausgeht und daß die Führungskanäle und die Förderbänder an einem gemeinsamen, mit größerer Fördergeschwindigkeit weiterfördernden Förderband enden.

Bei der erfindungsgemäßen Vorrichtung sorgen die spreizend auseinanderlaufenden Führungskanäle dafür, daß die Stäbchen mit Ausnahme der beiden äußeren Reihen spreizend auseinandergeführt werden. Da diese Stäbchen eine exakte geometrische Form haben, ist ein Transport in den Führungskanälen durch Schieben problemlos. Da die Stäbchen der beiden äußeren Reihen diese exakte geometrische Form häufig nicht haben, lassen sie sich nicht auf diese Art und Weise fördern. Sie würden zum Teil übereinandergeschoben werden. Damit gleichwohl ein problemloser Transport möglich ist, sind die beiden Einzelförderbänder vorgesehen. Das Raumproblem zur Unterbringung dieser Förderbänder ist dadurch gelöst, daß sie in einer tieferen Ebene angeordnet sind. Während die Führungskanäle und die Einzelförderbänder dafür sorgen, daß die Stäbchen auf seitlichen Abstand gebracht werden, sorgt das mit größerer Fördergeschwindigkeit weiterfördernde Förderband dafür, daß die Stäbchen auch in der Reihe auseinandergezogen werden. Deshalb können sie auf allen fünf freiliegenden Seiten, aber auch auf der Unterseite, in einem nachgeschalteten Panadeaggregat, wo sie abgelegt werden, mit einer Panade versehen werden.

Nach einer Ausgestaltung der Erfindung steigt das gemeinsame Förderband an der Übernahme mindestens von dem unteren Niveau der beiden Einzelförderbänder bis auf das Niveau der Führungskanäle an, wobei die Führungskanäle und das Ende der Einzelförderbänder den Anfang des gemeinsamen Förderbandes überlappen. Das ansteigende gemeinsame Förderband hat den doppelten Effekt, daß zum einen beim Übergang der einzelnen Stäbchen von den Einzelförderbändern beziehungsweise der Förderplattform die Stäbchen leicht abgeknickt werden, wodurch ein Trennen der dicht an dicht hintereinander geförderten Stäbchen erleichtert wird, und daß zum anderen durch das ansteigende Förderband der Niveauunterschied zwischen den beiden Ebenen weitgehend überbrückt wird.

Im folgenden wird die Erfindung anhand einer ein Ausführungsbeispiel darstellenden Zeichnung näher erläutert. Im einzelnen zeigen:

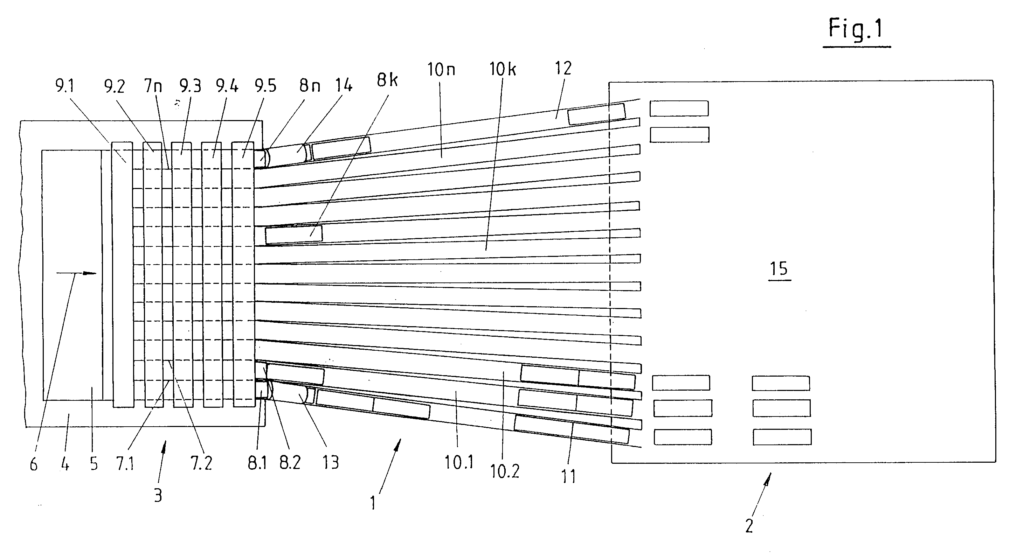

- Figur 1: eine Vorrichtung zum Vereinzeln von quaderförmigen Stäbchen aus tiefgefrorenem Lebensmittel in Aufsicht
**und**
- Figur 2: die Vorrichtung gemäß Figur 1 in Seitenansicht.

Der Vorrichtung 1,2 zum Vereinzeln von Stäbchen aus tiefgefrorenem Lebensmittel ist eine Schneidvorrichtung 3 vorgeordnet. Die Schneidvorrichtung 3 weist einen Tisch 4 auf, über den quaderförmige Platten 5 aus tiefgefrorenem Lebensmittel in Richtung eines Pfeils 6 vorgeschoben werden. Ferner weist sie unterhalb des Tisches 4 einen Satz kreisförmiger, angetriebener und parallel zueinander angeordneter Messerscheiben 7.1,7.2,7.k,7.n auf, die durch Schlitze in dem Tisch 4 hindurchragen. Diese Messerscheiben 7.1,... teilen die ihnen zugeführten Platten 5 in eine Vielzahl von Stäbchen 8.1,8.2,8.k,8.n auf. Die Platten 5 werden bei diesem Teilvorgang durch Niederhalter in Form von mehreren Rollen 9.1,9.2,9.3,9.4,9.5 niedergehalten. Diese Rollen 9.1,... können angetrieben sein, um die schiebende Förderung der Platten 5 beziehungsweise Stäbchen 8.1,... zu unterstützen. In der Zeichnung sind nur einige wenige Stäbchen 8.1,... stellvertretend für die in lückenloser Folge und in allen Reihen geförderten Stäbchen 8.1,... dargestellt.

An die Schneidvorrichtung 3 schließt sich die eigentliche Vereinzelungsvorrichtung 1,2 an, die im ersten Teil 1 aus einer Vielzahl von nebeneinander angeordneten, dem Format der Stäbchen 8.1,... angepaßten oben offenen Kanälen 10.1,10.2,10.k,10.n besteht, die spreizend auseinanderlaufen. Diese Kanäle 10.1,... sind den mittleren Reihen der Stäbchen 8.2,8.n-1 zugeordnet. Durch die Kanäle 10.1,... werden die Stäbchen 8.2,...,8.n-1 geschoben. Damit die Stäbchen 8.2,...,8.n-1 in die Kanäle 10.1,... eingeschoben werden können, fluchten deren seitliche Begrenzungswände mit den Messerscheiben 7.1,... .

Für die beiden äußeren Reihen der Stäbchen 8.1,8.n sind Einzelförderbänder 11,12 in einem unterhalb des Niveaus der Führungskanäle 10.1,... liegenden Niveau vorgesehen. Die Anordnung der Förderbänder 11,12 in diesem tieferen Niveau macht es möglich, daß sie bis dicht an den Ausgang der Schneidvorrichtung 3 herangeführt werden können, so daß die Stäbchen 8.1,8.n beim Verlassen der Schneidvorrichtung über Abweiser 13,14 auf die Förderbänder 11,12 geleitet werden.

Während die Stäbchen 8.2,...,8.n-9 der mittleren Reihen also lückenlos hintereinanderliegen und durch die dem Format dieser exakt quaderförmigen Stäbchen angepaßten Führungskanäle 10.1,... problemlos vorgeschoben werden können, erfolgt der problemlose Transport der nicht immer exakt quaderförmigen Stäbchen 8.1,8.n der äußeren Reihen durch die angetriebenen Förderbänder 11,12. Die Fördergeschwindigkeit dieser Einzelförderbänder 11,12 ist der Fördergeschwindigkeit der Stäbchen 8.2,...,8.n-1 in den Führungskanälen 10.1,... angepaßt.

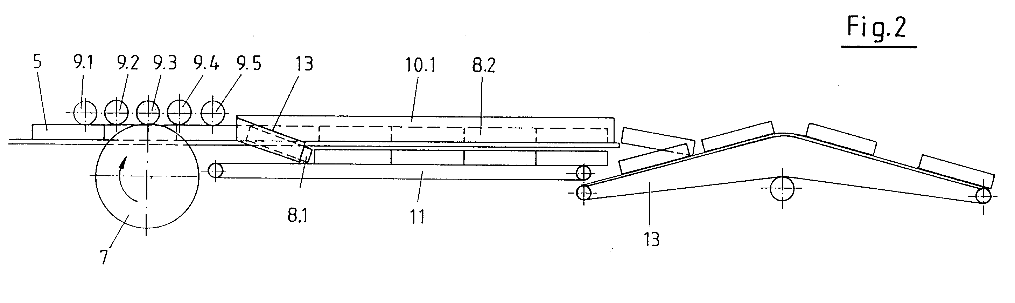

An das Ende der Führungskanäle 10.1,... und an das Ende der Einzelförderbänder 11,12 schließt sich ein gemeinsames Förderband 15 an, das mindestens von dem unteren Niveau der beiden Einzelförderbänder 11,12 bis auf das höhere Niveau der Führungskanäle 10.1,... ansteigt. Im Ausführungsbeispiel steigt es weiter bis auf einen oberen Umkehrpunkt an, um dann wieder abzufallen. Der Anstieg des Förderbandes 15 vermindert die Höhendifferenz, die die Stäbchen beim Übergang von den Einzelförderbändern 11,12 und den Führungskanälen 10.1,... auf das Förderband 15 zu überwinden haben. Die Höhendifferenz kann weiter dadurch vermindert werden, daß die Führungskanäle 10.1,... die Einzelförderbänder 11,12 in Förderrichtung überragen. Wie am Ausführungsbeispiel gemäß Figur 2 zu erkennen ist, knicken die Stäbchen beim Übergang von den Einzelförderbändern 11,12 und den Führungskanälen 10.1,... auf das gemeinsame Förderband 15 ab, wodurch sie voneinander getrennt werden. Sie werden in Längsrichtung durch die höhere Fördergeschwindigkeit des Förderbandes 15 weiter auseinandergezogen.

## Patentansprüche

1. Vorrichtung zum Vereinzeln von quaderförmigen Stäbchen (8.1-8.n), die von einer vorgeordneten, mehrere nebeneinander angeordnete, rotierende Messerscheiben (7.1-7.n) aufweisenden Schneidvorrichtung (7) aus in Querlage zugeführten, quaderförmige Platten (5) aus tiefgefrorenem Lebensmittel hergestellt und lückenlos vorgeschoben werden, **dadurch gekennzeichnet,** daß für jede der mittleren Reihen der lückenlos hintereinanderliegenden Stäbchen (8.2-8.n) ein Führungskanal (10.1-10.n) von der Schneidvorrichtung (7) ausgeht und die Gesamtheit der Führungskanäle (10.1-10.n) spreizend auseinanderläuft, daß für jede der beiden äußeren Reihen der Stäbchen (8.1-8.n) ein unterhalb des Niveaus der Führungskanäle (10.1-10.n) angeordnetes Einzelförderband (11,12) ausgeht, daß die Führungskanäle (10.1-10.n) und die auseinanderlaufenden Einzelförderbänder (11,12) an einem gemeinsamen, mit größerer Fördergeschwindigkeit weiterfördernden Förderband (14) enden.

2. Vorrichtung nach Anspruch 1,
**dadurch gekennzeichnet,** daß das gemeinsame Förderband (14) an der Übernahme mindestens von dem unteren Niveau der beiden Einzelförderbänder (11,12) bis auf das Niveau der Führungskanäle (10.1-10.n) ansteigt, wobei die Führungskanäle (10.1-10.n) und das Ende der Einzelförderbänder (11,12) den Anfang des gemeinsamen Förderbandes (15) überlappen.
